(19) Europäisches Patentamt

European Patent Office

Office européen des brevets

(11) **EP 0 580 237 B1**

(12) **EUROPEAN PATENT SPECIFICATION**

(45) Date of publication and mention
of the grant of the patent:
**29.10.1997 Bulletin 1997/44**

(51) Int Cl.$^6$: **H02M 1/00**, H02M 1/10

(21) Application number: **93202111.6**

(22) Date of filing: **19.07.1993**

(54) **Power factor correction circuit**

Leistungsfaktorkorrekturschaltung

Circuit de correction du facteur de puissance

(84) Designated Contracting States:
**DE FR GB NL**

(30) Priority: **20.07.1992 NL 9201296**

(43) Date of publication of application:
**26.01.1994 Bulletin 1994/04**

(73) Proprietor: **N.V. Nederlandsche Apparatenfabriek NEDAP**
**NL-7141 DE Groenlo (NL)**

(72) Inventor: **Hoeksma, Gerben Simon**
**NL-7103 DX Winterswijk (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**US-A- 4 831 508**

• ELECTRONIC DESIGN, vol. 37, no. 12, June 1989, Hasbrouck Heights, NJ, US, pp. 81-84, XP000039359; F. GOODENOUGH : 'PWM Controller Chip Fixes Power Factor'
• SIEMENS COMPONENTS, vol. XXI, no. 3, June 1986, Berlin, DE, pp. 103-107; M. HERFURTH : 'TDA 4814 - Integrated Circuit for Sinusoidal Line Current Consumption'

## Description

The invention relates to a power factor correction circuit suitable for use after a full-wave rectified a.c. voltage source and comprising a self-induction, a semiconductor switch element and at least one rectifier diode which are connected as a boost-converter, and followed by a smoothing capacitor, with a control circuit provided for controlling the semiconductor switch element, and a regulating circuit for influencing the control circuit such that a desired value of the output voltage on the smoothing capacitor is maintained, wherein the control and regulating circuit comprises;

first means which, while being supplied with a signal which originates from the self-induction and indicates demagnetization of this self-induction, generate a first output signal which indicates that the voltage across the self-induction changes sign with a certain minimum voltage sweep;
second means which generate a set pulse after a certain time after the semiconductor switch element was brought into conduction;
third means for generating a second output signal which indicates the current flowing through the semiconductor switch element; and
fourth means for generating a control signal for bringing the semiconductor switch element into and out of conduction respectively;
wherein the fourth means, while being supplied with the first output signal and the set pulse, control the semiconductor switch element in such a manner that the controllable semiconductor switch element is brought into conduction each time if the voltage across the self-induction changes sign with a certain minimum voltage sweep or, if occurring earlier, the certain time after the semiconductor switch element was brought into conduction the previous time has lapsed.

Such a power factor correction circuit is known from Siemens Components, vol. XXI, no. 3, June 1986, BERLIN DE, pages 103-107.

Legal standards are coming into force for this, as described in EN 60555-2. A circuit correcting the power factor is also disclosed in the publication '3 kW-Switchmode power supply providing sinusoidal mains current and large range of DC-output', by H. Knöll, in Proceedings PCI 80, 2.6.1.-2.6.17. Such circuits are further disclosed in Siemens' data book 'IC's für Industrielle Anwendungen', 1989/90, under type number TDA 4814 A. Further, data in respect of such a circuit are known from the publication 'Active Harmonic Filter of 600 W Output Power, Working at a Constant Operating Frequency', PCIM proceedings, June 1990, Munich, pages 238-248.

In the known circuits, without exception, a continuous measurement of the output d.c. voltage is used, which is compared with the desired value in a PI(D)-control, which sets the coefficient by which the momentaneous value of the input current is controlled. This control method has as a drawback that in the case of a great amplification factor, the ripple with double mains frequency in the output voltage is amplified. This leads to fluctuation of the coefficient, as a consequence of which the input voltage is distorted, the power factor becomes worse and higher harmonics are produced. On the other hand, a low amplification factor leads to the output load jumps and mains voltage jumps being slowly controlled to zero.

Further, these known circuits have as a drawback that a multiplier circuit must be used, which is relatively expensive and, in integrated form, often exhibits great deviations in the multiplying coefficient, resulting in great differences in the control loop amplification. In this connection, see for instance the data for the IC TDA 4814 A. Although the circuit described in the publication PCI 80, 2.6, has a high efficiency, it has a relatively low switching frequency. As a result, a relatively large coil and fairly expensive release networks for the switching semiconductors are required.

Another type of circuit also employing a multiplier for multiplying an integrated output voltage and a rectified input voltage is known from Electronic Design, vol. 37, no. 12, June 1989, Hasbrouck Heights, New Jersey US, pages 81-84.

This known circuit delivers an output voltage to be supplied to a pulse width modulation converter and a system load.

The publication 'Active Harmonic Filter of 600 W Output Power, Working at Constant Operating Frequency', Proceedings PCIM 90, 5.3, pages 238-248, teaches that with such a circuit, operating at a fixed and relatively low switching frequency of 50 kHz, an efficiency of only 95% is achieved at an input voltage of 220 VAC and an output voltage of 360 VDC. The efficiency is limited by losses as a consequence of socalled reverse recovery currents in the rectifier diode. Further, at an input a.c. voltage of 115 V, the circuit described in the above-mentioned publication can only produce a power of 300 W.

Measurements have shown that in power factor correction circuits where the inductor current first decreases to zero before the semiconductor circuit is brought into conduction again, as applied in, for instance, IC TDA 4814 A, an efficiency of more than 98% can be achieved. This is caused by the fact that the coil used has a small number of windings and also a small core volume (little energy storage per switching cycle), so that the copper losses remain slight. Also, if modern ferrite materials are used, like the material 3F3 of Philips, the magnetization losses involved remain low and, further, no losses due to reverse recovery currents in the rectifier diode occur. It is true that conduction losses in the MOSFET switch are greater than in the case of a circuit with a small voltage ripple, but the conduction period round the peaks of the mains voltage is relatively short, so that the conduction losses account for only a small portion of the total losses.

Further, publication EUR 0 345 624 teaches that in circuits operating as IC TDA 4814 A, the proper operation is wasted by incidental overvoltages at the input side in that the demagnetized condition of the coil can no longer be established.

Further, in the known circuits, no attention is paid to the capacitive currents caused by the high-frequency suppression filter at the input. As a consequence, the power factor can deteriorate under certain circumstances, due to phase shifts in the input filter.

Further, the known circuits have current programming at the input thereof. As a consequence, higher harmonics may be produced round the zero passages of the input mains voltage due to swing-in phenomena of the input filter.

A circuit with IC type TDA 4814 has as a further drawback that in the case of a universal mains input for an a.c. voltage of 115 V as well as an a.c. voltage of 230 V, the difference between minimum and maximum operating frequency becomes very great, particularly if also the load varies very strongly. This causes problems of control, efficiency and radiofrequency interference elimination.

A first object of the invention is to provide a power factor correction circuit which does not need a multiplier, which further has a high efficiency, of the order of magnitude of 98% or more, has no problems with incidental overvoltages at the input, has only very small losses due to reverse recovery currents in the rectifier diode and has a resistance character at the input, so that the input filter is damped automatically. According to further elaborated embodiments of the invention, as a second object, also the proper operation at an input voltage of 115 V as well as 230 V is optimized, while in other embodiments, as the third and fourth objects respectively, the behavior at a very low load is improved and the capacitive character of the input filter is compensated. A fifth object is to permit, in yet another embodiment, a large control amplification, so that the deviations of the output voltage remain small in the event of jumps in the load and the mains voltage, even with a relatively small smoothing capacitor.

The first object can be realized by providing that, a power factor correction circuit as described above is characterized in that the control and regulating circuit further comprises:

fifth means for generating a sawtooth signal which increases with time from a fixed level from the moment that the semiconductor switch element was brought into conduction; and
a control amplifier which, while being supplied with a signal which represents the output voltage, generates a first limit value,
wherein the fourth means, while being supplied with the second signal, the sawtooth signal and the first limit value control the semiconductor switch element in such a manner that the semiconductor switch element is brought out of conduction if the sawtooth signal exceeds the first limit value, or, if occurring earlier, the current through the semiconductor switch element or through the self-induction exceeds a certain predetermined current limit value.

Hence, the controllable power semiconductor is switched on after demagnetization of the self-induction has been established. If this demagnetization is not established, the controllable power semiconductor is also switched on after a specified maximum time. Switching off takes place after a signal, increasing with time and starting at a fixed level from the moment that the controllable power semiconductor comes into conduction, exceeds a limiting value generated by an output voltage control circuit, or if, before that, a particular maximum current through the controllable power semiconductor or through the coil mentioned is established, very shortly after this current has been established.

The second object can be realized by providing the coil included in the power factor correction circuit with two (practically) identical windings or by using two (practically) identical coils and connecting these windings or coils in parallel for an input voltage of 115 V and in series for an input voltage of 230 V.

The third object can be realized by adding to the signal produced by the above-mentioned control circuits or to the signal increasing with time, a signal derived from the rectified, but unsmoothed mains voltage.

The fourth object can be realized by adding to the signal produced by the above-mentioned control circuit or to the signal increasing with time, a signal obtained by differentiating the rectified, but unsmoothed mains voltage.

The fifth object can be realized by including a sample & hold circuit in the control circuit, with samples being taken round the zero passage of the a.c. mains voltage.

US patent no. 4,831,508 discloses a power factor correction circuit wherein the input current to the rectifier circuit is repeatedly switched on and off to regulate the power factor. Alternatively, the output current of the rectifier is repeatedly short-circuited. However, the circuit does not comprise self-induction connected as a boost-converter.

The invention will be further explained hereinafter with reference to the accompanying drawings of some practical examples.

Fig. 1 shows a block diagram of a possible embodiment of the power factor correction circuit according to the invention;
Fig. 2 shows a possible embodiment of the control and regulating circuits; and
Fig. 3 shows a possible embodiment of the input circuit.

In the following description, mains voltages of 100-120 V nominally and 220-240 V nominally are started from, referred to hereinafter as 115 V and 230 V. However, the invention is not limited to these voltage ranges.

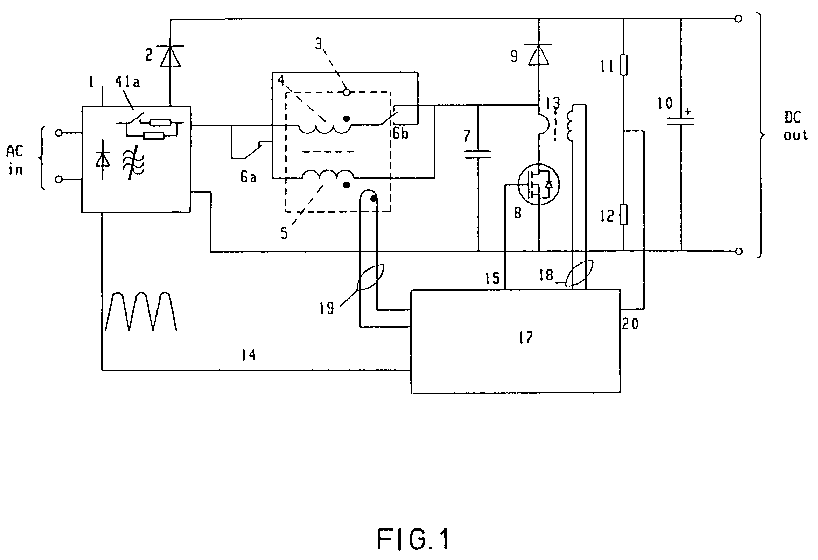

In the circuit shown in Fig. 1, the incoming a.c. mains voltage 'AC in' passes an input circuit 1, including a rectifier circuit, a high-frequency rejection filter and a making-current limiting circuit. Coupled to the output of the input circuit are a coil 3, a semiconductor switch 8 and a rectifier diode 9, connected as a boost-converter. At the output of the power factor correction circuit, a smoothing capacity 10 is included. To the output terminals 'DC out' the load is connected. The windings 4 and 5 of coil 3 can be connected in series or in parallel via relay contacts 6a and 6b. Included in series with semiconductor switch 8 is a current transformer 13, whose output is connected to a regulating circuit 17. A capacity 7 may be connected in parallel to the semiconductor switch element 8. A signal 19 originating from coil 3 indicates demagnetization of this coil. The output voltage 'DC out' is presented to regulating circuit 17 via voltage divider 11, 12. Via signal line 15, the control electrode of semiconductor switch 8 is controlled. A clip diode 2 can divert input voltage peaks to the smoothing capacity 10.

The current through semiconductor switch 8 always increases from zero or a slightly negative value to a maximum value. The duration of conduction is practically constant during half a mains period. After semiconductor switch 8 has been switched off, diode 9 takes over the inductor current. Capacity 7 limits the dV/dt during switching off, so that switching losses in, and overvoltage across, semiconductor switch 8 are limited. This is important in particular at full power and 115 V input voltage. The current through diode 9 decreases to zero. The di/dt involved is relatively low, so that the reverse recovery load remains small. Subsequently, the current through diode 9 decreases still further to a small negative value. When the diode is recovered, the voltage across coil 3 reverses polarity. This is established via a signal connection 19, whereupon a new conduction period of semiconductor switch 8 starts. The stabilized value of the mains voltage is typically 420 V. At an input voltage of 115 V, the voltage swings back completely after the rejection of diode 9. At an input voltage of 230 V, the voltage on the peaks of the mains voltage swings back only partially, whereupon the capacity 7 is further discharged by bringing semiconductor switch 8 into conduction. This involves some additional losses. For this reason, if so desired, the capacity 7 can be switched off at an input voltage of 230 V by means of switching means present for that purpose, or obtain a lower value.

In all cases, except in the case of the very lightest load, the current through coil 3 has a triangular course. If the conduction period of semiconductor switch 8 is kept constant during half a mains period, the peak value of the current is proportional to the momentaneous input voltage. The average value of the current flowing at the input of the input high-frequency rejection filter in the input circuit 1, is half this peak value. At a self-induction $L_3$ of coil 3, a conduction period $t_{on}$ of semiconductor switch 8 and input voltage $U_i$, the value of the average input current is

$$i_i = \frac{1/2 \times U_i \times t_{on}}{L_3}$$

Thus, at the input, the circuit behaves like a resistor $R_i$ with the value

$$R_i = \frac{2L_3}{t_{on}}$$

This apparent resistor also damps resonances in the input filter. For the same power, at an input voltage of 115 V, the input current must be double the value at 230 V. Now, by providing coil 3 with two equal windings and connecting these in series at 230 V and in parallel for 115 V, the value L3 at 115 V becomes a quarter of the value at 230 V. That is to say, the value of $t_{on}$ must in both cases be the same to be able to produce the maximum power. Further, in this manner, the copper loss is equal in both these cases, as is the degree of core saturation. The same can be realized by applying two equal coils and connecting them in series or in parallel.

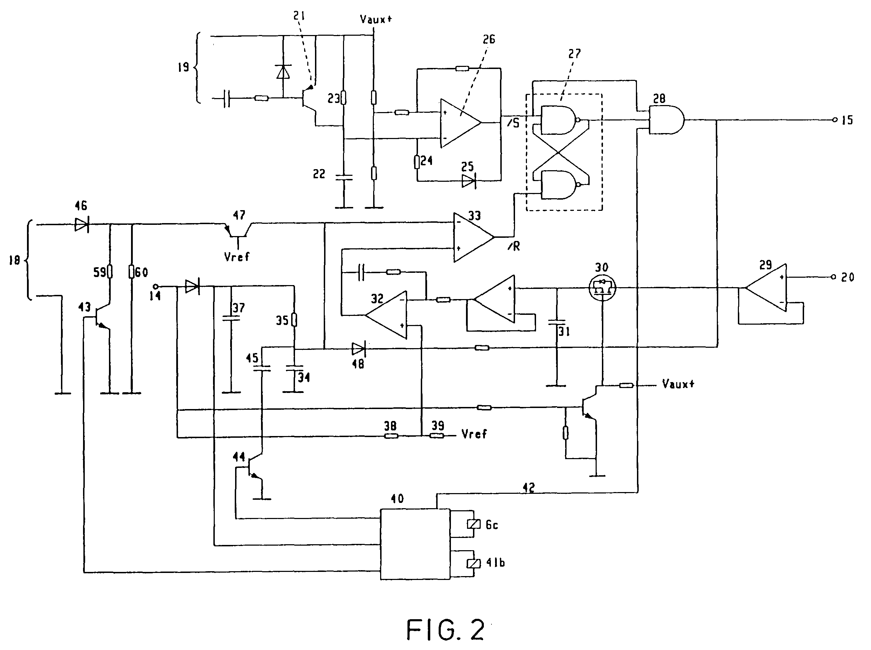

A possible embodiment of the control and regulating circuit 17 is shown in Fig. 2. An RC oscillator, built up around comparator 26, passes set impulses S to flip-flop 27, whereby via and-gate 28 and via signal line 15 an on-command is given to semiconductor switch 8. The conduction is stopped as soon as comparator 33 delivers a reset impulse to flip-flop 27. This last is the case as soon as the sawtooth voltage on capacitor 34 exceeds a limiting value generated by control amplifier 32, or as soon as the current through semiconductor switch 8 exceeds a predetermined limiting value. After semiconductor switch 8 has been switched off, through the reversal of the polarity of the voltage across coil 3, transistor 21 is brought into conduction via signal connection 19. As a result, the - input of comparator 26 is rendered 'high' and signal S becomes 'low'. Via gate 28, the control signal for semiconductor switch 8 remains blocked. As soon as coil 3 is demagnetized, the voltage across coil 3 changes sign again and transistor 21 blocks. The capacitor 22 is then discharged by diode 25 and resistor 24 and signal S becomes high. Via gate 28, semiconductor switch 8 is brought into the conducting position again. If the output voltage of the boost-converter is located very close to the input voltage, demagnetization may take very long. Further, the voltage reversal across coil 3 after demagnetization may then be so small that it can no longer be established by transistor 21. Because the circuit round comparator 26 is designed as an RC oscillator, a set impulse /S will even then, after a specific period, be generated, whereupon the semiconductor switch 8 is brought into conduction again. This situation may occur during starting, in the event of overload of the output and in the event of overvoltage on the input. In these circumstances, the current-limiting circuit ensures that the current through the semiconductor switch does not rise to any inadmissibly high values. The sawtooth signal on capacitor 34 is obtained through the capacitor 34 being charged via resistor 35 from the relatively high voltage across capacitor 37, obtained from the rectified input voltage. Thus, the incline of the sawtooth voltage is proportional to the peak value of the input voltage. In this manner, at a specific value of the output voltage of control circuit 32, the peak voltage through coil 3 becomes practically independent of the level of the input voltage. If signal 15 has become low, capacitor 34 is discharged again via diode 48. At an input voltage of 230 V, a capacitor 45 is connected in parallel via transistor 44. This ensures that at an input voltage of 115 V as well as 230 V, at a maximum control signal from control amplifier 32, the same conduction period for semiconductor switch 8 is set. This results in the same power and therefore in equal control amplification. Current measurement through the semiconductor switch element 8 takes place via current transformer 13, diode 46 and current-measuring resistors 59 and 60. Transistor 43 is switched on at an input voltage of 115 V. As soon as the voltage across the current-measuring resistors exceeds the value $V_{ref}$ and $V_{be}$ (47), transistor 47 comes into conduction and flip-flop 27 is reset via comparator 33, whereupon semiconductor switch 8 is brought out of conduction. The current-limiting level at an input voltage of 115 V is approximately twice the current-limiting level at an input voltage of 230 V.

After being divided in the voltage divider 11, 12, the output voltage is supplied over signal line 20 and via buffer 29 to MOSFET switch 30. This switch is brought into the conducting position round the zero passages of the mains voltage and then passes the measured value of the output voltage to hold capacitor 31. Finally, a PI-control amplifier 32 generates the regulating signal whereby the conduction period of semiconductor switch 8 is set. Via voltage dividers 38, 39, a signal is added to the reference voltage $V_{ref}$, ensuring that in the case of small powers, the reset impulses /R become high only on and round the peaks of the mains voltage and remain low beyond them. Accordingly, the boost-converter is only operative on and round the peaks of the mains voltage, so that the maximum operating frequency does not become too high, while yet the requirements described in EN 60555-2 are met.

From the voltage across capacitor 37, circuit 40 determines whether an input voltage of 115 V or 230 V is presented, and operates relay coil 6c and transistors 43 and 44. Also, at switch-on, relay coil 41b is energized. At switch-on and 115 V - 230 V switching, the boost-converter is blocked via signal 42.

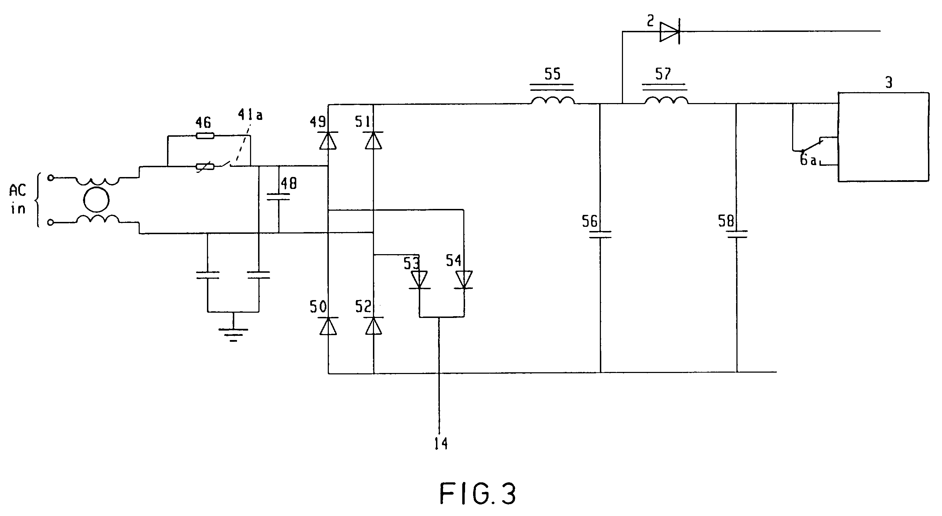

A possible embodiment of the input circuit is shown in Fig. 3. Some time after the mains voltage has been presented, the making-current limiting resistor 46 is bridged by relay contact 41a. Rectification of the input voltage is effected by diodes 49, 50, 51 and 52. Via diodes 53 and 54, signal 14 is generated. Suppression of the disturbing currents generated by the boost-converter is effected by a filter, comprising coils 55 and 57 and capacitors 48, 56 and 58. Clip diode 2 is connected to the junction of the coils 55 and 57. Via a differentiating network, a signal can be derived from signal 14, which is added to the control circuit 32 (Fig. 2) or to the sawtooth voltage in such a manner that the currents taken up from the mains by the boost-converter become smaller after the zero passages of the mains voltage and greater after the peaks of the mains voltage, so that the capacitive character of the input filter is compensated.

For particular applications, particular parts of the above-described circuit can be omitted. If only a single input voltage is presented or if the difference between minimum and maximum power is relatively small, or if the maximum power is small in the absolute sense, the 115 V - 230 V switch can be omitted. Futher, at minimum load, it will not always be necessary to have the circuit operate only on the peaks of the mains voltage. The sample & hold circuit can be omitted in applications where no high control rate is required. The sample & hold circuit can also be included after the control amplifier 32. The clip diode 2 can also be omitted in certain applications or be replaced by a varistor in the input circuit. Further, current limitation can be effected by including a current measuring circuit in the output circuit, such that it measures the current through the coil of the boost-converter, and by connecting the output of this circuit to terminals 18 of Fig. 2. Accordingly, the reset signal will remain active as long as the current through the coil is still above the limiting value, so that semiconductor switch 8 is not brought into the conducting state.

## Claims

1.  A power factor correction circuit suitable for use after a full-wave rectified (1) a.c. voltage source and comprising a self-induction (3), a semiconductor switch element (8) and at least one rectifier diode (9) which are connected as a boost-converter, and followed by a smoothing capacitor (10), with a control circuit (17) provided for controlling the semiconductor switch element (8), and a regulating circuit (17) for influencing the control circuit such that a desired value of the output voltage on the smoothing capacitor (10) is maintained, wherein the control and regulating circuit (17) comprises;

    first means (21, 22, 24, 25, 27) which, while being supplied with a signal which originates from the self-induction (3) and indicates demagnetization of this self-induction, generate a first output signal which indicates that the voltage across the self-induction (3) changes sign with a certain minimum voltage sweep; second means (22, 23, 24, 25, 26) which generate a set pulse after a certain time after the semiconductor switch element (8) was brought into conduction; third means (13, 46, 59, 60) for generating a second output signal which indicates the current flowing through the semiconductor switch element (8); and fourth means (27, 28, 33, 47) for generating a control signal for bringing the semiconductor switch element into and out of conduction respectively; wherein the fourth means, while being supplied with the first output signal and the set pulse, control the semiconductor switch element (8) in such a manner that the controllable semiconductor switch element (8) is brought into conduction each time if the voltage across the self-induction changes sign with a certain minimum voltage sweep or, if occurring earlier, the certain time after the semiconductor switch element (8) was brought into conduction the previous time has lapsed, characterized in that, the control and regulating circuit (17) further comprises; fifth means (34, 35, 37, 44, 45) for generating a sawtooth signal which increases with time from a fixed level from the moment that the semiconductor switch element (8) was brought into conduction; and a control amplifier (32) which, while being supplied with a signal which represents the output voltage, generates a first limit value, wherein the fourth means, while being supplied with the second signal, the sawtooth signal and the first limit value control the semiconductor switch element (8) in such a manner that the semiconductor switch element (8) is brought out of conduction if the sawtooth signal exceeds the first limit value, or, if occurring earlier, the current through the semiconductor switch element (8) or through the self-induction (3) exceeds a certain predetermined current limit value.

2. A power factor correction circuit according to claim 1, characterized in that the incline of the sawtooth signal is approximately proportional to the peak value of the input voltage.

3. A power factor correction circuit according to claim 1 or 2, characterized in that to said sawtooth signal a signal is added that is derived from the rectified input voltage.

4. A power factor correction circuit according to claim 1 or 2, characterized in that to the level generated by said regulating circuit a signal is added that is derived from the rectified input voltage.

5. A power factor correction circuit according to any one of the preceding claims, suitable for two input voltage ranges differing from each other by approximately a factor of two, characterized in that the self-induction included in the boost-converter has two windings, and that means are provided capable of connecting the windings in parallel for the low input voltage range and in series for the high input voltage range.

6. A power factor correction circuit according to one of claims 1-4, suitable for two input voltage ranges differing from each other by approximately a factor of two, characterized in that the boost-converter includes two coils, and that means are provided capable of connecting the coils in parallel for the low input voltage range and in series for the high input voltage range.

7. A power factor correction circuit according to claim 5 or 6, characterized in that said current limit value for the low input voltage range is higher than that for the high input voltage range.

8. A power factor correction circuit according to claim 5, 6 or 7, characterized in that the incline of said sawtooth signal is approximately as large in the middle of the low input voltage range as it is in the middle of the high input voltage range.

9. A power factor correction circuit according to any one of the preceding claims, characterized in that said regulating circuit (17) comprises a sample & hold circuit (30, 31), with sampling taking place at or in the direct vicinity of the zero passages of the input a.c. voltage.

10. A power factor correction circuit according to any one of the preceding claims, characterized in that one or more additional capacitors (7) are connected between the junction of said semiconductor switch element (8) and said rectifier diode (9) on the one hand and one or both connections of said smoothing capacitor (10) on the other.

11. A power factor correction circuit according to claim 10, suitable for two input voltage ranges differing from each other by approximately a factor of two, characterized in that the total capacity value of said one or more additional capacitors (7) is smaller for the high input voltage range than for the low input voltage range.

**12.** A power factor correction circuit according to claim 10, suitable for two input voltage ranges differing from each other by approximately a factor of two, characterized in that said one or more additional capacitors (7) operate only for the low input voltage range.

## Patentansprüche

**1.** Leistungsfaktorkorrekturschaltung zur Verwendung hinter einer vollweggleichgerichteten Wechselspannungsquelle (1), mit einer Selbstinduktion (3), einem Halbleiterschaltelement (8) und mindestens einer Gleichrichterdiode (9), die als Boost-Konverter geschaltet sind und auf die ein Glättungskondensator (10) folgt, mit einer Steuerschaltung (17) zum Steuern des Halbleiterschaltelementes (8) und einer Regelschaltung (17) zum Beeinflussen der Steuerschaltung derart, daß ein gewünschter Wert der Ausgangsspannung am Glättungskondensator (10) aufrechterhalten wird, wobei die Steuer- und Regelschaltung (17) aufweist:

eine erste Einrichtung (21,22,24,25,27), die, während sie ein von der Selbstinduktion (3) ausgehendes und die Entmagnetisierung der Selbstinduktion angebendes Signal erhält, ein erstes Ausgangssignal erzeugt, welches angibt, daß die Spannung an der Selbstinduktion (3) bei Überstreichen einer bestimmten Mindest-Spannung das Vorzeichen wechselt;

eine zweite Einrichtung (22,23,24,25,26), die eine bestimmte Zeit, nachdem das Halbleiterschaltelement (8) in den Leitendzustand versetzt wurde, einen Setz-Impuls erzeugt;

eine dritte Einrichtung (13,46,59,60) zum Erzeugen eines zweiten Ausgangssignals, das den durch das Halbleiterschaltelement (8) fließenden Strom angibt; und

eine vierte Einrichtung (27,28,33,47) zum Erzeugen eines Steuersignals, um das Halbleiterschaltelement in den bzw. aus dem Leitendzustand zu bringen;

wobei die vierte Einrichtung, während sie das erste Ausgangssignal und den Setz-Impuls erhält, das Halbleiterschaltelement (8) derart steuert, daß das steuerbare Halbleiterschaltelement (8) jedes Mal in den Leitendzustand versetzt wird, wenn die Spannung an der Selbstinduktion bei Überstreichen einer bestimmten Mindest-Spannung das Vorzeichen wechselt, oder, sofern dies früher eintritt, falls die bestimmte Zeit, nachdem das Halbleiterschaltelement (8) das vorherige Mal in den Leitendzustand versetzt wurde, verstrichen ist,

dadurch gekennzeichnet, daß die Steuer- und Regelschaltung (17) ferner aufweist:

eine fünfte Einrichtung (34,35,37-45) zum Erzeugen eines Sägezahnsignals, das von dem Moment an, zu dem das das Halbleiterschaltelement (8) in den Leitendzustand versetzt wurde, ausgehend von einem festen Pegel mit der Zeit ansteigt; und

einen Steuerverstärker (32), der, während er ein die Ausgangsspannung repräsentierendes Signal erhält, einen ersten Grenzwert erzeugt,

wobei die vierte Einrichtung, während sie das zweite Signal, das Sägezahnsignal und den ersten Grenzwert erhält, das Halbleiterschaltelement (8) derart steuert, daß der Leitendzustand des Halbleiterschaltelementes (8) beendet wird, wenn das Sägezahnsignal den ersten Grenzwert überschreitet, oder, sofern dies früher eintritt, wenn der durch das Halbleiterschaltelement (8) oder durch die Selbstinduktion (3) fließende Strom einen vorbestimmten Stromgrenzwert überschreitet.

**2.** Leistungsfaktorkorrekturschaltung nach Anspruch 1, dadurch gekennzeichnet, daß die Steigung des Sägezahnsignals dem Peak-Wert der Eingangsspannung ungefähr proportional ist.

**3.** Leistungsfaktorkorrekturschaltung nach Anspruch 1 oder 2, dadurch gekennzeichnet, daß dem Sägezahnsignal ein von der gleichgerichteten Eingangsspannung abgeleitetes Signal hinzuaddiert wird.

**4.** Leistungsfaktorkorrekturschaltung nach Anspruch 1 oder 2, dadurch gekennzeichnet, daß dem von der Regelschaltung erzeugten Pegel ein von der gleichgerichteten Eingangsspannung abgeleitetes Signal hinzuaddiert wird.

**5.** Leistungsfaktorkorrekturschaltung nach einem der vorhergehenden Ansprüche, zur Verwendung für zwei Eingangsspannungsbereiche, die sich voneinander ungefähr um den Faktor zwei unterscheiden, dadurch gekennzeichnet, daß die in dem Boost-Konverter enthaltene Selbstinduktion zwei Wicklungen aufweist, und daß eine Einrichtung vorgesehen ist, die in der Lage ist, die Wicklungen für den Bereich niedriger Eingangsspannung parallel zu schalten und für den Bereich hoher Eingangsspannung in Reihe zu schalten.

6. Leistungsfaktorkorrekturschaltung nach einem der Ansprüche 1-4, zur Verwendung für zwei Eingangsspannungsbereiche, die sich voneinander ungefähr um den Faktor zwei unterscheiden, dadurch gekennzeichnet, daß der Boost-Konverter zwei Wicklungen aufweist, und daß eine Einrichtung vorgesehen ist, die in der Lage ist, die Wicklungen für den Bereich niedriger Eingangsspannung parallel zu schalten und für den Bereich hoher Eingangsspannung in Reihe zu schalten.

7. Leistungsfaktorkorrekturschaltung nach Anspruch 5 oder 6, dadurch gekennzeichnet, daß der Grenzwert für den Bereich niedriger Eingangsspannung größer ist als derjenige für den Bereich hoher Eingangsspannung.

8. Leistungsfaktorkorrekturschaltung nach Anspruch 5, 6 oder 7, dadurch gekennzeichnet, daß der Anstieg des Sägezahnsignals in der Mitte des Bereiches niedriger Eingangsspannung ungefähr so groß ist wie in der Mitte des Bereiches hoher Eingangsspannung.

9. Leistungsfaktorkorrekturschaltung nach einem der vorhergehenden Ansprüche, dadurch gekennzeichnet, daß die Regelschaltung (17) eine Abtast- und Halteschaltung (30,31) aufweist, wobei das Abtasten an oder in direkter Nähe zu den Null-Durchgängen der Eingangs-Wechselspannung erfolgt.

10. Leistungsfaktorkorrekturschaltung nach einem der vorhergehenden Ansprüche, dadurch gekennzeichnet, daß einer oder mehrere zusätzliche Kondensatoren (7) zwischen dem Verbindungspunkt des Halbleiterschaltelementes (8) und der Gleichrichterdiode (9) einerseits und einem oder beiden Anschlüsse des Glättungskondensators (10) anderseits angeschlossen sind.

11. Leistungsfaktorkorrekturschaltung nach Anspruch 10, zur Verwendung für zwei Eingangsspannungsbereiche, die sich voneinander ungefähr um den Faktor zwei unterscheiden, dadurch gekennzeichnet, daß der Gesamt-Kapazitätswert des einen oder der mehreren zusätzlichen Kondensatoren (7) für den Bereich hoher Eingangsspannung kleiner ist als für den Bereich niedriger Eingangsspannung.

12. Leistungsfaktorkorrekturschaltung nach Anspruch 10, zur Verwendung für zwei Eingangsspannungsbereiche, die sich voneinander ungefähr um den Faktor zwei unterscheiden, dadurch gekennzeichnet, daß der eine oder die mehreren zusätzlichen Kondensatoren (7) nur für den Bereich niedriger Eingangsspannung arbeiten.

**Revendications**

1. Circuit de correction du facteur de puissance pouvant être utilisé après une source (1) de tension en courant alternatif redressé sur les deux alternances et comprenant un composant d'auto-induction (3), un élément de commutation à semi-conducteur (8) et au moins une diode de redressement (9) qui sont couplés à la façon d'un convertisseur élévateur et suivis par un condensateur de lissage (10), un circuit de commande (17) étant présent pour commander l'élément de commutation à semi-conducteur (8) et un circuit de régulation (17) servant à influencer le circuit de commande pour que soit maintenue une valeur souhaitée de la tension de sortie sur le condensateur de lissage (10), dans lequel le circuit (17) de régulation et de commande comprend :

- des premiers moyens (21, 22, 24, 25, 27) qui, quand ils reçoivent un signal provenant du composant d'auto-induction (3) et indiquant une désaimantation de ce composant d'auto-induction, produisent un premier signal de sortie indiquant que la tension aux bornes du composant d'auto-induction (3) change de signe avec un certain balayage minimum de la tension,

- des deuxièmes moyens (22, 23, 24, 25, 26) qui produisent une impulsion définie au bout d'un certain temps après que l'élément de commutation à semi-conducteur (8) a été mis à l'état passant.

- des troisièmes moyens (13, 46, 59, 60) servant à produire un deuxième signal de sortie qui indique le passage d'un courant dans l'élément de commutation à semi-conducteur (8), et

- des quatrièmes moyens (27, 28, 33, 47) servant à produire un signal de commande pour mettre l'élément de commutation à semi-conducteur (8) respectivement à l'état passant et hors de l'état passant, dans lequel les quatrièmes moyens, lorsqu'ils reçoivent le premier signal de sortie et l'impulsion définie, commandent l'élément de commutation à semi-conducteur (8) de telle sorte que l'élément de commutation à semi-conducteur commandable (8) soit amené à l'état passant chaque fois que la tension aux bornes du composant d'auto-induction change de signe avec un certain balayage minimum de la tension ou, si cela se produit avant, quand le certain temps s'est écoulé après le précédent instant où l'élément de commutation à semi-conducteur (8) a été mis à l'état passant,

caractérisé en ce que le circuit (17) de régulation et de commande comprend en outre :

- des cinquièmes moyens (34, 35, 37 45) servant à produire un signal en dents de scie qui augmente avec le temps par rapport à un niveau fixé depuis le moment où l'élément de commutation à semi-conducteur (8) a été mis à l'état passant, et

- un amplificateur de commande (32) qui, lorsqu'il reçoit un signal représentant la tension de sortie, produit une première valeur limite,

dans lequel les quatrièmes moyens, lorsqu'ils reçoivent le deuxième signal, le signal en dents de scie et la première valeur limite, commandent l'élément de commutation à semi-conducteur (8) de telle manière que l'élément de commutation à semi-conducteur (8) soit mis hors d'état passant si le signal en dents de scie dépasse la première valeur limite ou, si cela se produit avant, quand le courant traversant l'élément de commutation à semi-conducteur (8) ou le composant d'auto-induction (3) dépasse une certaine valeur limite de courant prédéterminée.

2.  Circuit de correction du facteur de puissance selon la revendication 1, caractérisé en ce que la pente du signal en dents de scie est approximativement proportionnelle à la valeur de crête de la tension d'entrée.

3.  Circuit de correction du facteur de puissance selon la revendication 1 ou 2, caractérisé en ce qu'un signal dérivé de la tension d'entrée redressée est ajouté audit signal en dents de scie.

4.  Circuit de correction du facteur de puissance selon la revendication 1 ou 2, caractérisé en ce qu'un signal dérivé de la tension d'entrée redressée est ajouté au niveau produit par ledit circuit de régulation.

5.  Circuit de correction du facteur de puissance selon l'une quelconque des précédentes revendications, adapté à deux plages de tensions d'entrée qui diffèrent l'une de l'autre d'un facteur approximativement de deux, caractérisé en ce que le composant d'auto-induction contenu dans le convertisseur élévateur comporte deux enroulements et en ce que des moyens sont prévus qui sont capables de coupler les enroulements en parallèle pour la plage de tensions d'entrée la plus basse et en série pour la plage de tensions d'entrée la plus haute.

6.  Circuit de correction du facteur de puissance selon l'une quelconque des revendications 1 à 4, adapté à deux plages de tensions d'entrée qui diffèrent l'une de l'autre d'un facteur approximativement de deux, caractérisé en ce que le convertisseur élévateur contient deux bobines et en ce que des moyens sont prévus qui sont capables de coupler les bobines en parallèle pour la plage de tensions d'entrée la plus basse et en série pour la plage de tensions d'entrée la plus haute.

7.  Circuit de correction du facteur de puissance selon la revendication 5 ou 6, caractérisé en ce que ladite valeur limite de courant pour la plage de tensions d'entrée la plus basse est supérieure à celle pour la plage de tensions d'entrée la plus haute.

8.  Circuit de correction du facteur de puissance selon la revendication 5, 6 ou 7, caractérisé en ce que la pente dudit signal en dents de scie est approximativement aussi grande au milieu de la plage de tensions d'entrée la plus basse qu'au milieu de la plage de tensions d'entrée la plus haute.

9.  Circuit de correction du facteur de puissance selon l'une quelconque des précédentes revendications, caractérisé en ce que ledit circuit de régulation (17) comprend un circuit (30, 31) d'échantillonnage et blocage dont l'échantillonnage a lieu pour les passages par zéro de la tension alternative d'entrée ou au proche voisinage de ceux-ci.

10. Circuit de correction du facteur de puissance selon l'une quelconque des précédentes revendications, caractérisé en ce qu'un ou plusieurs condensateurs supplémentaires (7) sont branchés entre la jonction dudit élément de commutation à semi-conducteur (8) et de ladite diode de redressement (9) d'une part et l'une des connexions dudit condensateur de lissage (10) ou les deux d'autre part.

11. Circuit de correction du facteur de puissance selon la revendication 10, adapté à deux plages de tensions d'entrée qui diffèrent l'une de l'autre d'un facteur approximativement de deux, caractérisé en ce que la capacité totale dudit ou desdits condensateur(s) supplémentaire(s) (7) est plus faible pour la plage de tensions d'entrée la plus haute que pour la plage de tensions d'entrée la plus basse.

12. Circuit de correction du facteur de puissance selon la revendication 10, adapté à deux plages de tensions d'entrée qui diffèrent l'une de l'autre d'un facteur approximativement de deux, caractérisé en ce que ledit ou lesdits condensateur(s) supplémentaire(s) (7) ne fonctionnent que pour la plage de tensions d'entrée la plus basse.

FIG.1

FIG. 2

FIG.3

EP 0 580 237 B1